# EUROPEAN PATENT SPECIFICATION

(11) **EP 2 477 896 B1**
(45) Date of publication and mention of the grant of the patent: **19.06.2013**
(21) Application number: 10760123.9
(22) Date of filing: 14.09.2010
(51) Int. Cl.: B65B 9/14, B29C 63/42, B65C 3/06

(54) **A DEVICE FOR ARRANGING A SLEEVE-LIKE FOIL ENVELOPE AROUND AN OBJECT AS WELL AS A SPREADING ELEMENT FOR USE IN SUCH A DEVICE**
VORRICHTUNG ZUM ANBRINGEN EINER SCHLAUCHFÖRMIGEN FOLIENUMHÜLLUNG UM EINEN GEGENSTAND SOWIE SPREIZELEMENT ZUR VERWENDUNG IN EINER SOLCHEN VORRICHTUNG
DISPOSITIF DE MISE EN PLACE D'UNE ENVELOPPE DE TYPE MANCHON AUTOUR D'UN OBJET ET ELEMENT ECARTEUR UTILISE DANS UN TEL DISPOSITIF

(30) Priority: 14.09.2009 NL 1037282
(43) Date of publication of application: 25.07.2012
(73) Proprietor: Fuji Seal International, Inc., Osaka-shi, Osaka 532-0003 (JP)
(72) Inventor: VAN RIJSEWIJK, Lucas, NL-5753 DB Deurne (NL); HOEBEN, Wilhelmus Johannes Franciscus, NL-5753 DB Deurne (NL); HADFY-KOVÁCS, Imre, NL-5753 DB Deurne (NL)
(74) Representative: de Baat, Michiel Anton
(86) International application number: PCT/NL2010/050590
(87) International publication number: WO 2011/031160

(56) References cited:
- DE-U1- 9 012 390
- FR-A1- 2 603 019
- US-A- 6 070 399
- US-A1- 2005 126 715

## Description

The invention relates to a device for arranging a sleeve-like foil envelope around an object, comprising supply means for supplying said sleeve-like foil envelope around at least one spreading element in a horizontal orientation, as well as discharge means for discharging the sleeve-like foil envelope from the device and arranging it around the object, wherein said spreading element has an inlet side configured as a flat element portion, an outlet side and a transition area located between said inlet side and said outlet side, and wherein said spreading element widens towards the transition area in a direction perpendicular to the plane of the flat element portion, whilst the spreading element has an at least substantially constant circumference at least in the direction from the inlet side to the transition area.

The invention also relates to a spreading element for use in such a device.

Such a device is disclosed in, for example, European patent application no. 0763498. In said device, the foil envelope has been pre-produced in the form of a continuous strip, which is wound on a supply reel and which is to be cut to the correct length by means of a device as described in the introductory paragraph. The individual flat sleeve-like foil envelopes must subsequently be opened by means of a spreading element and be arranged around an object, such as a bottle or a container, with some oversize.

The foil material used therewith is made of a so-called shrink material, which shrinks as a result of heat being applied and which forms with a close fit to the shape of the bottle or container around which the sleeve-like envelope has been arranged.

A drawback of the known device is that it is only suitable for use with thick or stiff foil materials in order to thus realise a high handling rate. When thinner or more flexible foil materials are used, the handling rate must be reduced in order to prevent undesirable jamming of the device. Said jamming of the device is caused by friction and creasing phenomena, among other factors, which manifest themselves more strongly when thin foils are being handled.

It has furthermore been found that the foil material becomes distorted when the flat strip of foil material is being supplied around the spreading element, which may result in undesirable material stresses in the material, which may lead to damage and/or rupture. Furthermore, the foil material cannot be adequately arranged around the product in that case and, on the other hand, the distortions in the material may lead to blocking and standstill of the device.

The object of the invention is to obviate these drawbacks, and in order to accomplish that object the device and the spreading element have the features included in claim 1 and in claim 13, respectively.

In this way an effective deformation of the foil material is realised, so that said foil material is converted from the flat orientation in which it is introduced into the device to an open orientation, and that with a minimum extent of distortion, such as creases.

More in particular, all kinds of stress concentrations in the foil material are minimized, making it possible to use even thinner foils and realise higher throughput rates.

In the invention, the spreading element can be supported on the conveying means, which conveying means are located in the plane of the flat element part, the spreading element being provided with a first set of opposite first guide rollers at the location of the transition area, which first guide rollers can be supported on a drivable first drive roller that forms part of the conveying means.

More specifically, the spreading element can be freely suspended in the device. This enables easy resetting of the device for another type or sort of foil material and a corresponding spreading element. As a result of the suspended position, the crease formed upon deformation of the foil material into a sleeve may be smoothed out, so that the sleeve will have a rounder shape, making it easier to arrange the sleeve over the product.

More specifically, the spreading element can be supported on the conveying means, wherein the spreading element is in particular provided with a first set of opposite first guide rollers at the location of the transition area, which first guide rollers can be supported on one of the drivable first drive rollers that form part of the conveying means.

Said set of opposite first guide rollers may consist of two guide rollers.

In one embodiment, the spreading element is provided with a second set of opposite second guide rollers near its outlet side, which second guide rollers can be supported on one of the drivable second drive rollers that form part of the discharge means.

Said second set of opposite second guide rollers may consist of two guide rollers.

All pairs of rollers consisting of a driven roller and a guide roller are in continuous contact with the driving gear, making it possible to realise high rates of movement or accelerations of the foil material through the device without subjecting the foil to inertia forces. Furthermore, this makes it possible for the foil material to be automatically fed into the device, so that resetting the device can take place more efficiently, since it is no longer necessary in that case to guide the foil material manually between and past the various rollers.

Since the guide rollers may be accommodated in recesses provided in the spreading element, small overall dimensions can be realised, whilst exchanging the spreading element in the device can take place in a quick and efficient manner.

In order to prevent material stresses in the foil material resulting from possible differences in speed between the drive rollers and the guide rollers, at least the first drive rollers are according to the invention at least partially provided with a contact surface that has a lower coefficient of friction than the guide rollers. Said contact surface may be made of plastic material, for example.

Furthermore, the conveying means may be provided with orientation means for orienting the spreading element in the device, in particular perpendicularly to the device. This makes it possible to realise a correct fixation and orientation of the spreading element in the device, whilst also the exchanging operation can be carried out quickly and without additional adjusting operations being required.

Said orientation means may comprise at least one ridge formed on the first drive rollers, which ridge engages in the first guide rollers.

The foil exhibits a single curved plane near the driven pairs of rollers, so that the occurrence of stresses in the foil will be minimal.

According to another embodiment, the element portion has a cylindrical, an oval or a polygonal shape.

The invention will now be explained in more detail with reference to a drawing, in which:
Figure 1 shows an embodiment of a device according to the prior art;
Figures 2a and 2b are views of an embodiment of a spreading device according to the invention;
Figures 3a and 3b are views showing another aspect of a spreading element according to the invention.

For a better understanding of the invention, like parts will be indicated by identical numerals in the description of the figures below.

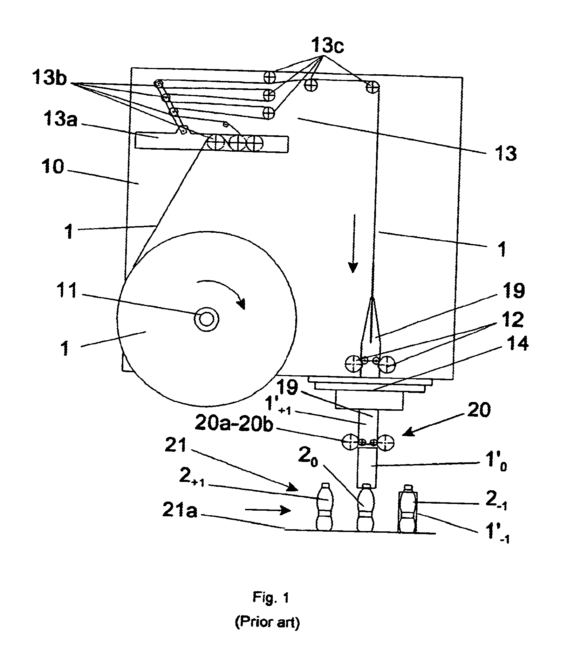

In figure 1, numeral 10 indicates a device according to the prior art. The device 10 comprises conveying means, such as first drive rollers 12, built up of two drivable rollers, between which a continuous strip of foil material 1 can be passed. The continuous strip of foil material 1 is wound on a supply reel 11 and is introduced into the device via a tensioning mechanism 13. The tensioning mechanism 13 comprises an arm 13a, which is pivotally connected to the device. The pivot arm 13a has several rollers 13b, over which the continuous strip of sleeve-like foil material 1 is passed. The strip of sleeve-like foil material 1 is also passed over additional, fixedly disposed rollers 13c. In this way it is possible on the one hand to realise a certain amount of stock in the continuous strip of sleeve-like foil material being unwound from the real 11, but above all it is possible to set up a certain tension therein.

The conveying means, such as first drive rollers 12, carry the continuous strip of sleeve-like foil material 1 past cutting means 14 for cutting the foil material 1 through at certain intervals so as to obtain individual sleeve-like foil envelopes 1'. All kinds of embodiments of the cutting means 14 are possible, which embodiments can be assumed to be known to those of average skill in the art. A spreading element 19 is provided at the location of the cutting means 14 and the supply side of the device 10, which element functions to open the obtained individual flat sleeve-like foil envelopes 1' for arranging the open sleeve-like foil envelope around a container 2.

As is clearly shown in figure 1, the spreading element 19 is widened at least in the plane perpendicular to the plane of the flat continuous strip of foil material 1. Thus, the individual flat sleeve-like foil envelopes ... - 1'₋₁ - 1'₀ - 1'₊₁ - ... are opened, so that they can be readily arranged around a container ... - 2'₋₁ - 2'₀ - 2'₊₁ - ... The containers ... - 2'₋₁ - 2'₀ - 2'₊₁ - ... are moved by conveyor, which are assumed to be known per se, which conveyor 21 comprise a carrier 21a, on which several containers (bottles, jars or cans) are present, which containers are conveyed to the device 10.

Each individual flat sleeve-like foil envelope ... - 1'₋₁ - 1'₀ - 1'₊₁ - ... is opened by the spreading element 19 and cut loose from the strip of foil material 1 by the cutting means 14, whereupon the thus opened sleeve-like foil envelope can be easily arranged over a container ... - 2'₋₁ - 2'₀ - 2'₊₁ - ... that is ready and waiting. The containers ... - 2'₋₁ - 2'₀ - 2'₊₁ - ... with the opened sleeve-like foil envelopes ... - 1'₋₁ - 1'₀ - 1'₊₁ - ... arranged thereover can now be discharged from the device 10 via the carrier 21a and be subjected to a heat treatment elsewhere, so that the sleeve-like foil envelope ... - 1'₋₁ - 1'₀ - 1'₊₁ - ... will shrink and form a close-fitting envelope around the container.

To assist in the discharge of the individual foil envelope ... - 1'₋₁ - 1'₀ - 1'₊₁ - ... surrounding the container ... - 2'₋₁ - 2'₀ - 2'₊₁ - ..., discharge means 20 may be provided, which are incorporated in the device at the location of the spreading element 19. Said discharge means may comprise one or more drivable rollers 20a, which are supported on the stationary rollers 20b and which discharge the sleeve-like foil material 1' extending therebetween from the device 10 at an accelerated rate, with the individual, opened foil envelope ... - 1'₋₁ - 1'₀ - 1'₊₁ - ... "slipping" over a container ... - 2'₋₁ - 2'₀ - 2'₊₁ - ... , as it were.

When a sleeve-like foil envelope 1' is to be arranged around a container 2, the foil envelope needs to be placed in an open position by the spreading element 19 so as to make it possible to arrange the envelope quickly and easily over the container 2.

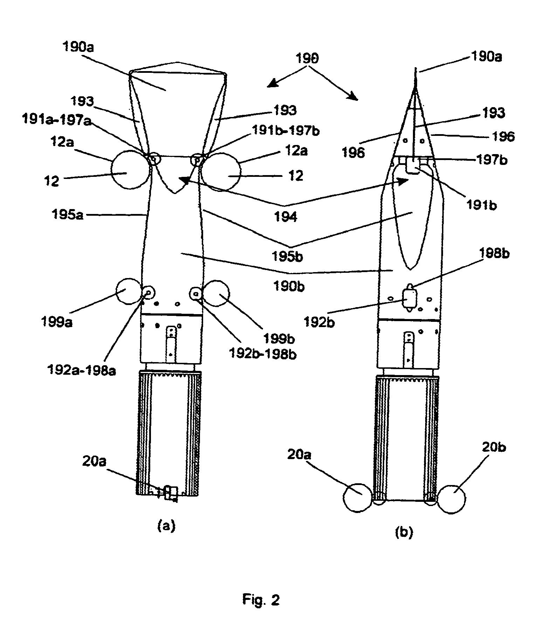

Figure 2a and 2b show embodiments of a spreading element or mandrel 190 according to the invention.

The spreading element 190 comprises a flat element portion 190a, which is configured as a flat plate having edges 193. The flat element portion 190a functions as an inlet side for the sleeve-like foil envelopes 1, which are supplied to the device in a flat orientation.

To open the individual flat sleeve-like foil envelope 1' so as to make it possible to arrange the open sleeve-like foil element around a container 2, the spreading element 190 must open the flat foil envelope 1' placed over the flat element portion 190a. It is desirable in that regard for the foil material to be deformed without stress concentrations in the foil material leading to distortions or tears, which would result in jamming and/or standstill of the device.

As figure 2a clearly shows, the spreading element 190 comprises a transition area 194, in which the spreading element 190 widens from the flat element portion 190a towards the transition area 194 in a direction perpendicular to the plane of the flat element portion (and consequently also of the flat sleeve-like foil envelope). This is clearly shown in figure 2b by means of reference numerals 196, which clearly indicate the widening of the flat element portion 190a towards the transition area 194.

More specifically, the flat element portion 190a is so constructed that it narrows towards the transition area 194, seen in the plane of the flat element portion. This is illustrated by means of the flange edges 193 in figures 2a and 2b, which flange edges have a curved but inwardly extending construction.

Accordingly, the spreading element is constructed so that it has a substantially constant circumference, at least in the direction from the inlet side (or the flat element portion 190a) towards the transition area 194, more in particular a substantially constant circumference towards the outlet side.

This configuration of the flat element portion 190a makes it possible to realise an efficient deformation of the flat sleeve-like foil element to an open sleeve-like foil element, which can be arranged around a product 2, without any disadvantageous material stresses occurring.

As is clearly shown in figures 2a and 2b, the spreading element 190 has a cylindrical shape near the outlet side 190b, in which connection it is noted that the external dimension of the spreading element 190 at the location where the open sleeve-like foil element 1' is arranged around the product 2₀ is larger than the dimension of the spreading element 190 at the transition area 194, which is represented as being square. The spreading element 190 may also have a different shape, however, such as an oval shape or a polygonal shape, such as a square, a rectangular or a multiangular shape.

The spreading element 190 is to that end provided with two recesses 195a-195b at the location of the transition area, which recesses are formed by material removed from the spreading element, the functionality of which recesses will be discussed yet hereinafter.

More in particular, the spreading element 190 can be freely suspended in the device, being supported on the first drive rollers 12, as is clearly shown in figure 2a. Reference numeral 12 indicates a first set of two opposite first drive rollers, which are fixedly connected to an immovable structure or to the frame structure of the device. The spreading element 190 can be positioned between the first drive rollers 12 and will be supported on the two drive rollers at the location of the transition area 194.

Positioning the spreading element 190 can be done quickly and expertly partially as a result of the presence of the recesses 195a-195b, which thus provide a clearance that makes it possible to place or position the spreading element 190 according to the invention between the first drive rollers 12.

In order to realise an efficient support of the spreading element 190 against the first drive rollers 12 in the device, the spreading element 190 is provided with a first set of two opposite guide rollers 191a-191b, which first guide rollers 191a-191b are each supported on one of the drivable first drive rollers 12 forming part of the conveying means.

Each guide roller 191a-191b is to that end disposed in slots 197a-197b. In order to obtain an adequate orientation of the spreading element 190 in the device, the spreading element is provided with a second set of two opposite second guide rollers 192a-192b near its outlet side, which second guide rollers are likewise disposed in slots or recesses 198a-198b in the spreading element. The second guide rollers 192a-192b are supported on drivable second drive/pressure rollers.

In order to prevent material stresses in the foil material, which stresses may occur as a result of differences in speed between the first drive rollers 12 and the guide rollers 191a-191b, at least the first drive rollers 12 are in part provided with a contact surface that has a lower coefficient of friction than the guide rollers 191a-191b. The contact surface may consist of a plastic material, for example.

Because several drive rollers are in contact with the spreading element, which drive rollers are furthermore all driven rollers, the foil envelope can be automatically introduced into the device, so that the device can be automatically prepared or reset.

Although this is not shown in the figures, the drive rollers may be provided with orientation means for precisely orienting and fixing the spreading element 190 in the correct orientation of the device. The orientation means may to that end form part of the conveying means and, for example, comprise a ridge 12a formed on the first drive rollers 12, which ridge 12a engages in a groove (not shown) formed in the circumferential surface of the first guide rollers 191a-191b. This makes it possible to realise a correct fixation and orientation of the spreading element 190 in the device, whilst also the exchanging of the spreading element 190 can be carried out quickly and without any additional adjustments, and thus without unnecessary loss of time.

It will be understood that, using the spreading element as described above, it is possible to handle thinner foil materials at an even higher operating rate, resulting in an increased capacity regarding the number of products to be processed per unit time.

As a result of the effective construction of the spreading element, conversion of the flat foil material from a flat orientation into an open sleeve-like foil element, which can be arranged around a product (such as a shampoo bottle), can take place without unnecessary distortions or damage.

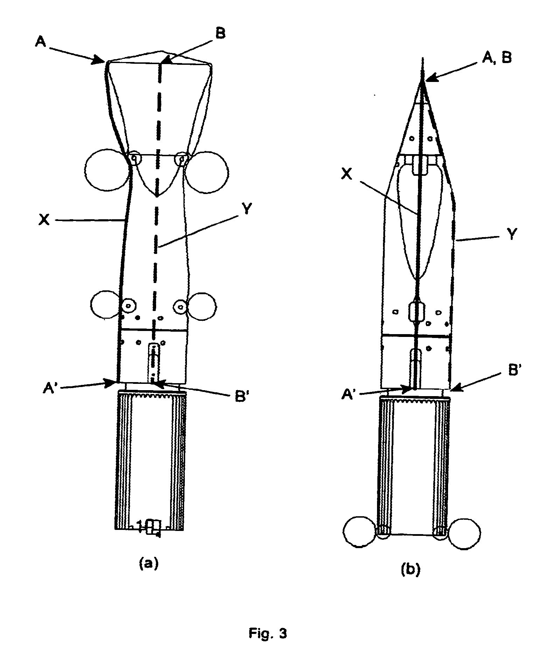

Since the spreading element has a substantially constant diameter at least up to the transition area, the sleeve like foil material is converted from the flat orientation in which it is supplied into an open shape in an even manner and with a minimum of material stresses, making it possible to arrange it around an object. The conversion of the flat foil material into an open sleeve-like foil element over the spreading element with a minimum of material stresses or distortions is illustrated in the side views of figures 3(a) and 3(b), in which references X and Y are two imaginary lines extending along the outer circumference of the spreading element.

The imaginary line X is located in the plane formed by the flat element portion 190a (see figures 2a and 2b) and is located between the imaginary points A-A'. The imaginary point A is located at the side edge of the flat element portion 190a, whilst the imaginary point A' is located at the outlet side of the spreading element. The imaginary line X extends along the spreading element in the plane of the flat element portion and along or through the recess 195a or 195b. The imaginary line Y extends in a straight line between the points B and B' on the other side of the spreading element. The imaginary point B is located at the upper side of the element portion, near the flat element portion 190a, whilst the imaginary point B' is located on the outlet side of the spreading element.

The spreading element is constructed so that the imaginary lines X and Y have the same length. This means that the foil material being carried over the spreading element will cover substantially the same distance on all sides of the spreading element while being converted from a flat foil sleeve into an open foil sleeve. This specific construction of the spreading element results in a minimum of material stresses in the foil material, so that standstill of the device is prevented as much as possible.

## Claims

1. A device (10) for arranging a sleeve-like foil envelope around an object, comprising
supply means for supplying said sleeve-like foil envelope around at least one spreading element (19,190) in a horizontal orientation, as well as
discharge means (20) for discharging the sleeve-like foil envelope from the device (10) and arranging it around the object, wherein
said spreading element (19,190) has an inlet side configured as a flat element portion (190a), an outlet side (190b) and a transition area (194) located between said inlet side and said outlet side (190b), and wherein
said spreading element (19,190) widens towards the transition area (194) in a direction perpendicular to the plane of the flat element portion (190a), whilst
the spreading element (19,190) has an at least substantially constant circumference at least in the direction from the inlet side to the outlet side (190b), such that the foil material being carried over the spreading element (19,190) will cover substantially the same distance on all sides of the spreading element (19,190) upon being converted from a flat foil sleeve to an open foil sleeve and wherein the spreading element (19,190) can be supported on conveying means, **characterised in that** the conveying means are located in the plane of the flat element part, the spreading element(19,190) being provided with a first set of opposite first guide rollers (191a-191b) at the location of the transition area, which first guide rollers (191a-191b) can be supported on a drivable first drive roller (12) that forms part of the conveying means.

2. A device (10) according to claim 1, **characterised in that** the guide rollers (191a-191b) are so disposed in the transition area (194) that the foil exhibits a single curvature in the region of the rollers (13b), so that the occurrence of material stresses in the foil material (1) is minimized.

3. A device (10) according to claim 1, 2 or 3, **characterised in that** the spreading element (19,190) can be freely suspended in the device (10).

4. A device (10) according to any one of the preceding claims, **characterised in that** said first set of opposite first guide rollers (191a-191b) consists of two guide rollers (13b).

5. A device (10) according to any one of the preceding claims, **characterised in that** the spreading element (19,190) is provided with a second set of opposite second guide rollers (192a-192b) near its outlet side (190b), which second guide rollers (192a-192b) can be supported on one of the drivable second drive rollers (199a-199b) that form part of the conveying means.

6. A device (10) according to claim 5, **characterised in that** said second set of opposite second guide rollers (192a-192b) consists of two guide rollers.

7. A device (10) according to any one of the preceding claims, **characterised in that** the guide rollers (191a-191b,192a-192b) are accommodated in recesses (197a-197b, 198a-198b) provided in the spreading element (19,190).

8. A device (10) according to one or more of the preceding claims, **characterised in that** at least the first drive rollers (12) are at least partially provided with a contact surface that has a lower coefficient of friction than the guide rollers.

9. A device (10) according to one or more of the preceding claims, **characterised in that** said first and/or said second guide rollers (191a-191b,192a-192b) function as pressure rollers for smoothing any creases formed in the foil material.

10. A device (10) according to one or more of the preceding claims, **characterised in that** the conveying means are provided with orientation means for orienting the spreading element (19,190) in the device (10).

11. A device (10) according to claim 10, **characterised in that** said orientation means comprise at least one ridge (12a) formed on the first drive rollers (12), which ridge (12a) engages in the first guide rollers (13b).

12. A device (10) according to one or more of the preceding claims, **characterised in that** the element portion has a cylindrical, an oval or a polygonal shape.

13. A spreading element (19,190) for a device according to one or more of the preceding claims, wherein
said spreading element (19,190) has an inlet side configured as a flat element portion (190a), an outlet side (190b) and a transition area (194)located between said inlet side and said outlet side (190b), and wherein
said spreading element (19,190) widens towards the transition area (194) in a direction perpendicular to the plane of the flat element portion (190a), whilst
the spreading element (19,190) has an at least substantially constant circumference at least in the direction from the inlet side to the outlet side (190b), such that the foil material being carried over the spreading element (19,190) will cover substantially the same distance on all sides of the spreading element (19,190) upon being converted from a flat foil sleeve to an open foil sleeve **characterised in that** the spreading element (19, 190) is arranged to be supported by conveying means located in the plane of the flat element part, the spreading element (19,190) being provided with a first set of opposite first guide rollers (191a-191b) at the location of the transition area, wherein the first guide rollers (191a-191b) are arranged to be supported on a drivable first drive roller (12) that forms part of the conveying means.

## Patentansprüche

1. Vorrichtung (10) zum Anordnen einer schlauchähnlichen Folienhülle um ein Objekt mit
einer Zufuhreinrichtung zum Zuführen der schlauchähnlichen Folienhülle um zumindest ein Spreizelement (19, 190) in einer horizontalen Orientierung sowie
einer Abgabeeinrichtung (10) zum Abgeben der schlauchähnlichen Folienhülle von der Vorrichtung (10) und um sie um das Objekt herum anzuordnen,
wobei das Spreizelement (19, 190) eine Einlassseite aufweist, die als Flachelementteil (190a) ausgebildet ist, eine Auslassseite (190b) und einen Übergangsbereich (194), der zwischen der Einlassseite und der Auslassseite (190b) angeordnet ist, und wobei
das Spreizelement (19, 190) sich in Richtung auf den Übergangsbereich (194) in einer Richtung rechtwinklig zur Ebene des Flachelementteils (190a) aufweitet, wobei
das Spreizelement (19, 190) einen zumindest wesentlich konstanten Umfang zumindest in der Richtung von der Einlassseite zu der Auslassseite (190b) derart aufweist, dass das Folienmaterial, das über das Spreizelement (19, 190) getragen wird, im Wesentlichen die gleiche Strecke an allen Seiten des Spreizelementes (19, 190) abdeckt, wenn es von einem flachen Folienschlauch zu einem offenen Folienschlauch umgewandelt wird und wobei das Spreizelement (19, 190) auf Fördermitteln getragen werden kann, **dadurch gekennzeichnet, dass** die Fördermittel in der Ebene des Flachelementteils angeordnet sind, wobei das Spreizelement (19, 190) mit einem ersten Satz von gegenüberliegenden ersten Führungsrollen (191a-191b) an der Position des Übergangsbereichs versehen ist, wobei erste Führungsrollen (191a-191b) auf einer ersten antreibaren Antriebsrolle (12) getragen werden, die einen Teil der Fördermittel bildet.

2. Vorrichtung (10) nach Anspruch 1, **dadurch gekennzeichnet, dass** die Führungsrollen (191a-191b) so in dem Übergangsbereich (194) angeordnet sind, dass die Folie eine einzige Krümmung in dem Bereich der Rollen (13b) aufweist, sodass das Auftreten von Materialbeanspruchungen in dem Folienmaterial (1) minimiert ist.

3. Vorrichtung (10) nach Anspruch 1, 2 oder 3, **dadurch gekennzeichnet, dass** das Spreizelement (19, 190) frei in der Vorrichtung (10) aufgehängt werden kann.

4. Vorrichtung (10) nach einem der vorstehenden Ansprüche, **dadurch gekennzeichnet, dass** der erste Satz von gegenüberliegenden ersten Führungsrollen (191a-191b) aus zwei Führungsrollen (13b) besteht.

5. Vorrichtung (10) nach einem der vorstehenden Ansprüche, **dadurch gekennzeichnet, dass** das Spreizelement (19, 190) mit einem zweiten Satz von gegenüberliegenden zweiten Führungsrollen (192a-192b) nahe seiner Auslassseite (190b) versehen ist, wobei die zweiten Führungsrollen (192a-192b) auf einer der antreibaren zweiten Antriebsrollen (199a-199b), die einen Teil der Fördermittel bilden, getragen werden kann.

6. Vorrichtung (10) nach Anspruch 5, **dadurch gekennzeichnet, dass** der zweite Satz von gegenüberliegenden zweiten Führungsrollen (192a-192b) aus zwei Führungsrollen besteht.

7. Vorrichtung (10) nach einem der vorstehenden Ansprüche, **dadurch gekennzeichnet, dass** die Führungsrollen (191a-191b, 192a-192b) in einer Ausnehmung (197a-197b, 198a-198b) aufgenommen sind, die in dem Spreizelement (19, 190) vorgesehen ist.

8. Vorrichtung (10) nach einem oder mehreren der vorstehenden Ansprüche, **dadurch gekennzeichnet, dass** zumindest die ersten Antriebsrollen (12) zumindest teilweise mit einer Kontaktfläche versehen sind, die einen kleineren Reibungskoeffizienten als die Führungsrollen aufweist.

9. Vorrichtung (10) nach einem oder mehreren der vorstehenden Ansprüche, **dadurch gekennzeichnet, dass** die ersten und/oder die zweiten Führungsrollen (191a-191b, 192a-192b) als Druckrollen zum Glätten irgendwelcher Falten, die in dem Folienmaterial gebildet werden, funktionieren.

10. Vorrichtung (10) nach einem oder mehreren der vorstehenden Ansprüche, **dadurch gekennzeichnet, dass** die Fördermittel mit einer Orientierungseinrichtung zum Orientieren des Spreizelementes (19, 190) in der Vorrichtung (10) versehen ist.

11. Vorrichtung (10) nach Anspruch 10, **dadurch gekennzeichnet, dass** die Orientierungseinrichtung zumindest eine Rippe (12a) aufweist, die auf der ersten Antriebsrolle (12) gebildet ist, wobei die Rippe (12a) mit den ersten Führungsrollen (13b) in Eingriff kommt.

12. Vorrichtung (10) nach einem oder mehreren der vorstehenden Ansprüche, **dadurch gekennzeichnet, dass** der Elementteil eine zylindrische, ovale oder polygonale Form aufweist.

13. Spreizelement (19, 190) für eine Vorrichtung nach einem oder mehreren der vorstehenden Ansprüche, wobei
das Spreizelement (19, 190) eine Einlassseite aufweist, die als ein Flachelementteil (190a) ausgebildet ist, eine Auslassseite (190b) und einen Übergangsbereich (194), der zwischen der Einlassseite und der Auslassseite (190b) ausgebildet ist, und wobei
das Spreizelement (19, 190) sich zum Übergangsbereich (194) in einer Richtung rechtwinklig zur Ebene des ersten Flachelementteils (190a) aufweitet, wobei
das Spreizelement (19, 190) einen zumindest im Wesentlichen konstanten Umfang in zumindest der Richtung von der Einlassseite zur Auslassseite (190b) derart aufweist, dass das Folienmaterial, das über das Spreizelement (19, 190) getragen wird, im Wesentlichen die gleiche Strecke an allen Seiten des Spreizelementes (19, 190) bei der Wandlung von einem flachen Folienschlauch zu einem offenen Folienschlauch abdeckt, **dadurch gekennzeichnet, dass** das Spreizelement (19, 190) ausgebildet ist, um durch Fördermittel getragen zu werden, die in der Ebene des Flachelementteils angeordnet sind, wobei das Spreizelement (19, 190) mit einem ersten Satz von gegenüberliegenden ersten Führungsrollen (191a-191b) in der Position des Übergangsbereichs versehen ist, wobei die ersten Führungsrollen (191a-191b) ausgebildet sind, um auf einer antreibaren ersten Antriebsrolle (12), die einen Teil der Fördermittel bildet, angeordnet zu werden.

## Revendications

1. Dispositif (10) pour agencer une enveloppe de type manchon autour d'un objet, comprenant :
des moyens d'alimentation pour amener ladite enveloppe de type manchon autour d'au moins un élément écarteur (19, 190) dans une orientation horizontale, ainsi que
des moyens de décharge (20) pour décharger l'enveloppe de type manchon du dispositif (10) et l'agencer autour de l'objet, dans lequel
ledit élément écarteur (19, 190) a un côté d'entrée configuré comme une partie d'élément plate (190a), un côté de sortie (190b) et une zone de transition (194) positionnée entre ledit côté d'entrée et ledit côté de sortie (190b), et dans lequel
ledit élément écarteur (19, 190) s'élargit vers la zone de transition (194) dans une direction perpendiculaire au plan de la partie d'élément plate (190a), alors que
l'élément écarteur (19, 190) a une circonférence au moins sensiblement constante au moins dans une direction allant du côté d'entrée au côté de sortie (190b), de sorte que le matériau de feuille qui est transporté sur l'élément écarteur (19, 190) recouvre sensiblement la même distance de tous les côtés de l'élément écarteur (19, 190) après avoir converti un manchon de feuille plat en un manchon de feuille ouvert et dans lequel l'élément écarteur (19, 190) peut être supporté sur des moyens de transport, **caractérisé en ce que** les moyens de transport sont positionnés dans le plan de la partie d'élément plate, l'élément écarteur (19, 190) étant prévu avec un premier ensemble de premiers rouleaux de guidage (191a - 191b) opposés à l'emplacement de la zone de transition, lesquels premiers rouleaux de guidage (191a - 191b) peuvent être supportés sur un premier rouleau d'entraînement (12) pouvant être entraîné, qui fait partie des moyens de transport.

2. Dispositif (10) selon la revendication 1, **caractérisé en ce que** les rouleaux de guidage (191a - 191b) sont disposés dans la zone de transition (194) de sorte que la feuille laisse apparaître une seule courbure dans la région des rouleaux (13b), de sorte que l'occurrence de tensions de matériau dans le matériau de feuille (1) est minimisée.

3. Dispositif (10) selon la revendication 1, 2 ou 3, **caractérisé en ce que** l'élément écarteur (19, 190) peut être librement suspendu dans le dispositif (10).

4. Dispositif (10) selon l'une quelconque des revendications précédentes, **caractérisé en ce que** ledit premier ensemble de premiers rouleaux de guidage (191a - 191b) opposés se compose de deux rouleaux de guidage (13b).

5. Dispositif (10) selon l'une quelconque des revendications précédentes, **caractérisé en ce que** l'élément écarteur (19, 190) est prévu avec un second ensemble de seconds rouleaux de guidage (192a - 192b) opposés à proximité de son côté de sortie (190b), lesquels seconds rouleaux de guidage (192a - 192b) peuvent être supportés sur l'un des seconds rouleaux d'entraînement (199a - 199b) pouvant être entraînés, qui font partie des moyens de transport.

6. Dispositif (10) selon la revendication 5, **caractérisé en ce que** ledit second ensemble de seconds rouleaux de guidage (192a - 192b) opposés, se compose de deux rouleaux de guidage.

7. Dispositif (10) selon l'une quelconque des revendications précédentes, **caractérisé en ce que** les rouleaux de guidage (191a - 191b, 192a - 192b) sont logés dans des évidements (197a - 197b, 198a - 198b) prévus dans l'élément écarteur (19, 190).

8. Dispositif (10) selon une ou plusieurs des revendications précédentes, **caractérisé en ce qu'**au moins les premiers rouleaux d'entraînement (12) sont au moins partiellement prévus avec une surface de contact qui a un coefficient de friction plus faible que les rouleaux de guidage.

9. Dispositif (10) selon une ou plusieurs des revendications précédentes, **caractérisé en ce que** lesdits premiers et/ou lesdits seconds rouleaux de guidage (191a - 191b, 192a - 192b) fonctionnement comme des rouleaux de pression pour lisser des plis formés dans le matériau de feuille.

10. Dispositif (10) selon une ou plusieurs des revendications précédentes, **caractérisé en ce que** les moyens de transport sont prévus avec des moyens d'orientation pour orienter l'élément écarteur (19, 190) dans le dispositif (10).

11. Dispositif (10) selon la revendication 10, **caractérisé en ce que** lesdits moyens d'orientation comprennent au moins une crête (12a) formée sur les premiers rouleaux d'entraînement (12), laquelle crête (12a) se met en prise dans les premiers rouleaux de guidage (13b).

12. Dispositif (10) selon une ou plusieurs des revendications précédentes, **caractérisé en ce que** la partie d'élément a une forme cylindrique, ovale ou polygonale.

13. Elément écarteur (19, 190) pour un dispositif selon une ou plusieurs des revendications précédentes, dans lequel
ledit élément écarteur (19, 190) a un côté d'entrée configuré comme une partie d'élément plate (190a), un côté de sortie (190b) et une zone de transition (194) positionnée entre ledit côté d'entrée et ledit côté de sortie (190b), et dans lequel
ledit élément écarteur (19, 190) s'élargit vers la zone de transition (194) dans une direction perpendiculaire au plan de la partie d'élément plate (190a), alors que
l'élément écarteur (19, 190) a une circonférence au moins sensiblement constante au moins dans la direction allant du côté d'entrée au côté de sortie (190b), de sorte que le matériau de feuille qui est transporté sur l'élément écarteur (19, 190) recouvre sensiblement la même distance de tous les côtés de l'élément écarteur (19, 190) après avoir converti un manchon de feuille plat en un manchon de feuille ouvert, **caractérisé en ce que** l'élément écarteur (19, 190) est agencé pour être supporté par des moyens de transport positionnés dans le plan de la partie d'élément plate, l'élément écarteur (19, 190) étant prévu avec un premier ensemble de premiers rouleaux de guidage (191a - 191b) opposés à l'emplacement de la zone de transition, dans lequel les premiers rouleaux de guidage (191a - 191b) sont agencés pour être supportés sur un premier rouleau d'entraînement (12) pouvant être entraîné, qui fait partie des moyens de transport.
